# EUROPÄISCHE PATENTSCHRIFT

(11) **EP 2 012 992 B1**
(45) Veröffentlichungstag und Bekanntmachung des Hinweises auf die Patenterteilung: **08.02.2012**
(21) Anmeldenummer: 07728000.6
(22) Anmeldetag: 11.04.2007
(51) Int. Cl.: B29C 43/20

(54) **VERFAHREN ZUR HERSTELLUNG EINES VERBUNDBAUTEILS**
METHOD FOR THE PRODUCTION OF A COMPOSITE COMPONENT
PROCÉDÉ POUR RÉALISER UNE PIÈCE COMPOSITE

(30) Priorität: 25.04.2006 DE 102006019007
(43) Veröffentlichungstag der Anmeldung: 14.01.2009
(73) Patentinhaber: KraussMaffei Technologies GmbH, 80997 München (DE)
(72) Erfinder: GRUBER, Marco, 81247 München (DE)
(74) Vertreter: Zollner, Richard
(86) Internationale Anmeldenummer: PCT/EP2007/053532
(87) Internationale Veröffentlichungsnummer: WO 2007/122107

(56) Entgegenhaltungen:
- EP-A- 0 495 219
- EP-A- 0 543 085
- EP-A- 0 995 568
- EP-A1- 0 894 604
- DE-A1- 4 139 035
- DE-A1- 4 318 574

## Beschreibung

Die vorliegende Erfindung betrifft ein Verfahren zur Herstellung eines beschichteten Verbundbauteils.

Bei solchen Verfahren werden beispielsweise aus einem thermoplastischen Kunststoffträger mittels einer Beschichtung Verbundbauteile hergestellt. Die Beschichtung kann dabei beispielsweise aus einem Polyurethan bestehen, mit welchem man gewünschte Oberflächenstrukturen oder Haptiken erzeugen kann.

Bisher gibt es insbesondere zwei bekannte Verfahren, mit denen man entsprechende Polyurethan-Oberflächen bei einem Verbundbauteil ausbilden kann. Zum einen ist es bekannt, ein thermoplastisches Kunststoffsubstrat in einer Kavität so anzuordnen, dass noch ein Spalt zwischen dem Substrat und der Kavitätswand besteht. In diesen Spalt wird ein Polyurethan-Material eingefüllt. Diesen Vorgang nennt man auch Überfluten. Ein solches Verfahren ist in der DE 10 2005 013 975 A1 beschrieben.

Anderseits kann man ein Verfahren verwenden, bei dem in einem ersten Arbeitsschritt eine Polyurethan-Haut ausgebildet wird. Eine solche Haut kann man beispielsweise mit einem sogenannten Slush-Prozess oder einem Sprühprozess herstellen. Bei einem Slush-Verfahren wird ein Kunststoffpulver oder -granulat in einer Galvanoform derart aufgeschmolzen, dass sich das Material unter Ausbildung einer entsprechenden Schicht an der Formwandung anlagert. Beim Aufsprühen eines PUR-Materials wird dieses mittels eines Sprühvorgangs auf eine entsprechende Oberfläche aufgetragen. Bei beiden Verfahren wird die Haut nach dem Ausreagieren aus der Form entnommen und in einem separaten Verarbeitungsschritt mit einem thermoplastischen Kunststoffmaterial hinterspritzt. Dieses Verfahren ist auch als "SkinForm-Verfahren" (SkinForm = Marke der Krauss-Maffei Kunststofftechnik GmbH) bekannt. Ein solches Verfahren zum Hinterspritzen einer Haut ist in der DE 699 05 745 T2 oder de EP 0 995 568 A1 beschrieben. In dem ersten Dokument sind verschiedene Alternativen für ein Verfahren zum Herstellen eines mehrschichtigen synthetischen Formteils beschrieben, bei denen zunächst - beispielsweise über ein Sprühverfahren - eine Haut hergestellt wird, die dann in einem zweiten Produktionsschritt auf unterschiedliche Art und Weise hinterspritzt wird.

Bei den heute bekannten Verfahrensabläufen zum gratfreien Überfluten eines Thermoplast-Trägerbauteils mit einem Polyurethan-Material in einem vollautomatischen Zyklus wird in der Regel ein geschlossenes Formwerkzeug mit einer verschlossenen Kavität verwendet. Problematisch ist hierbei die Realisierung einer notwendigen Entlüftung der Kavität zum Einfüllen des Polyurethan-Materials. Nahezu alle Polyurethan-Systeme müssen gezielt entlüftet werden, was gerade bei geschäumten Systemen entscheidend ist. Jede Entlüftung fordert zudem auch eine - wenn auch geringfügige - Nachbearbeitung des Bauteils, um die in den Entlüftungskavitäten ausgebildeten Angüsse bzw. Nasen zu entfernen. Überdies werden durch die notwendige Entlüftung die Designmöglichkeiten oftmals eingeschränkt.

Darüber hinaus sind seit langer Zeit Vorrichtungen und Verfahren zur Herstellung von mit Thermoplastmaterial hinterspritzer Dekormaterialien bekannt. Ein Beispiel dieser Technologie ist aus der EP 0 543 085 bekannt. Gemäß der darin beschriebenen Lehre wird eine Dekorschicht zwischen zwei Werkzeugformen eingespannt. Auf eine der Werkzeugformen wird ein noch nicht ausgehärtetes Thermoplastmaterial aufgebracht, welches beim Schließen der der Werkzeugformen durch einen Prägeschritt entsprechend der Kavitätsausgestaltung der Werkzeugform über die Dekorschicht verprägt wird. Nach dem Abkühlen kann das Dekor-Formteil entnommen werden, wobei das Thermoplastmaterial den Träger darstellt. Insofern ist dieses Verfahren dem vorgenannten SkinForm-Verfahren sehr ähnlich.

Aufgabe der vorliegenden Erfindung ist es, ein Verfahren anzugeben, bei dem die oben genannten Nachteile bei der Herstellung von Verbundbauteilen vermieden werden.

Diese Aufgabe wird durch die im Anspruch 1 genannten Merkmale verfahrensmäßig gelöst.

Ein Kerngedanke der vorliegenden Erfindung ist darin zu sehen, dass das PolyurethanMaterial nicht in eine geschlossene Form eingebracht, sondern auf eine offene formhälfte eines Formwerkzeugs aufgebracht bzw. aufgesprüht wird. Anschließend wird diese, mit dem noch nicht ausreagierten Polyurethan-Material benetzte Werkzeughälfte mit einer anderen Werkzeughälfte, in der beispielsweise ein den thermoplastischen Kunststoffträger bildendes Thermoplast-Substrat enthalten ist, verschlossen. Das Polyurethan-Material wird dabei auf das Thermoplast-Substrat (auch Vorspritzling genannt) aufgepresst oder aufgedrückt und reagiert unter Ausbildung eines Verbundkörpers damit aus. Durch diesen Niederdruck-Verpressvorgang kann eine deutlich verbesserte Entlüftung der Werkzeugkavität sichergestellt werden. Natürlich kann die Polyurethan-Formwerkzeughälfte auch durch einen Prägevorgang auf die Thermoplast-Werkzeughälfte aufgedrückt werden, wodurch das Polyurethan durch den Prägeschritt in der Kavität verteilt wird.

Vorzugsweise erfolgt das Aufbringen der Polyurethan-Schicht auf die Kavitätsoberfläche zyklusgleich zum Einbringen der Schmelze in das erste Formwerkzeug. In diesem Fall kann bei jedem Takt sowohl ein Vorspritzling wie auch ein beschichtetes Verbundprodukt hergestellt werden. Alternativ kann das Aufbringen der PolyurethanSchicht auf die Kavitätsoberfläche auch nach dem Einbringen der Schmelze in das erste Formwerkzeug und dem nachfolgenden Öffnen des ersten Formwerkzeugs erfolgen. So dauert der Herstellungsvorgang möglicherweise etwas länger, insbesondere, wenn man die Zeit zum Aufbringen des Polyurethan-Materials auf dieFormwerkzeugoberfläche abwarten muss, bevor das Formwerkzeug wieder geschlossen werden kann. Allerdings hat diese Verfahrensalternative den Vorteil, dass man evtl. mit nur einem Werkzeug auskommen kann.

Beim Aufbringen des Polyurethan-Materials auf die Kavitätsoberfläche einer offenen. Werkzeughälfte kann dieses durch Sprühen öder Aufspritzen geschehen. Alternativ kann auch eine Trägerschicht, beispielsweise in Form einer Folie, verwendet werden, auf die außerhalb des Formwerkzeugs das Polyurethan-Material aufgetragen wird oder aufgetragen worden ist. Nachfolgend wird die Trägerschicht, also die Folie, zusammen mit dem Polyurethan in die Kavität des Formwerkzeugs eingelegt. Die Folie kann dabei in einem Spannrahmen fixiert sein. Unabhängig davon, ob das Polyurethan-Material unmittelbar auf die Kavitätsoberfläche eines Formwerkzeugs aufgetragen wird oder aber auf eine Trägerschicht aufgebracht wird, kann ein Polyurethan-Mischkopf oder -sprühkopf verwendet werden, mit dem das Aufbringen unmittelbar erfolgt.

Vorzugsweise können mehrere unterschiedliche Polyurethan-Materialien nacheinander (beispielsweise in verschiedenen Bereichen) auf die Kavitätsoberfläche aufgesprüht werden. So kann man lokal unterschiedliche Haptiken oder lokale Verstärkungen realisieren. Auch können Materialien mit unterschiedlichen Eigenschaften und Farben verwendet werden. Überdies ist es möglich, hochviskose und/oder hochbefüllte Polyurethan-Systeme mit diesem Verfahren zu verarbeiten.

Das Umsetzen des das Substrat bildende Spritzgussteils kann durch Verdrehen beispielsweise mit einem Drehtisch, einer Indexplattenanordnung der einer Wendeplatte geschehen oder aber durch Verschieben mit einer Schiebetischanordnung. Die Vorrichtungen eines Drehtisches, einer Indexplattenanordnung oder einer Wendeplatte, wie auch eines Schiebetisches sind dabei hinlänglich aus dem Stand der Technik bekannt. Wird das Substrat nicht umgesetzt, sondern vielmehr die mit dem Polyurethan-Material versehene Formwerkzeughälfte der Formhälfte mit dem Spritzgussteil zugeordnet, so kann dies ebenfalls mittels einer Drehtisch-, Indexplatten, Wendeplatten oder Schiebetischanordnung geschehen.

Um ein einfaches Ablösen des Polyurethan-Materials von der Kavitätsoberfläche sicherzustellen, kann vor dem Auftragen des Polyurethan-Materials ein Trennmittel auf die Kavitätsoberfläche aufgebracht werden. Bei der Verwendung einer Trägerfolie kann diese gleichzeitig als Trennmedium vorgesehen sein.

Zudem kann vor dem Aufbringen des Polyurethan-Materials eine Lackschicht auf die Kavitätsoberfläche aufgetragen werden. Mit einem solchen als "In-Mould-Technik" bezeichneten Verfahren ist es möglich, lackierte Oberflächen Polyurethan-Oberflächen zu generieren.

Natürlich können in die Kavität auch andere Einlegermaterialien vor dem Einfüllen des Polyurethan-Materials eingebracht werden.

Um zu verhindern, dass das Polyurethan-Material beim Schließen der beiden Formwerkzeughälften und Aufdrücken bzw. Verprägen des Polyurethans auf das Substrat aus der Kavität herausgepresst wird, ist es möglich, einen Spannrahmen zwischen der das Substrat aufweisenden Formwerkzeughälfte und der Polyurethan-Formwerkzeughälfte zu verwenden. Ein solcher Spannrahmen sollte die Kavität, insbesondere vor dem eigentlichen Prägevorgang, gegenüber der Außenumgebung abschließen. Alternativ kann hierbei auch ein Tauchwerkzeug verwendet werden.

Eine weitere vorteilhafte Ausführungsform ist dadurch gekennzeichnet, dass zum Einfügen in die Formwerkzeughälfte des Polyurethan-Formwerkzeugs ein Einsatz vorgesehen ist, der die Kavitätsausnehmung zumindest im Wesentlichen umfasst. Dabei kann das Polyurethan-Material außerhalb der Schließeinheit in den Einsatz eingebracht werden. Anschließend wird der Einsatz zusammen mit dem PolyurethanMaterial in die Formwerkzeughälfte eingelegt und anschließend der Schritt zum Schließen des Formwerkzeugs und zum Aufdrücken des Polyurethan-Materials auf das thermoplastische Substrat durchgeführt. Diese Ausführungsform hat den Vorteil, dass eine Vielzahl solcher Einsätze vorgesehen werden können, die parallel in den unterschiedlichen Verfahrensschritten handhabbar sind. Beispielsweise ist es möglich, während eines Prägevorgangs einen anderen Einsatz außerhalb der Schließeinheit bereits wieder zu besprühen. Überdies ist es möglich, die Einsätze in ihrer Form und Oberflächengestaltung unterschiedlich auszubilden.

Bei der Verwendung eines solchen Einsatzes sollte vorzugsweise die Fixierung der Einsätze in der Formwerkzeughälfte möglich sein. Dazu könnte beispielsweise ein Schnellspann- oder Bajonettsystem verwendet sein.

Die Erfindung soll nachfolgend anhand von verschiedenen Ausführungsbeispielen und mit Bezug auf die beiliegenden Zeichnungen näher erläutert werden. Die Zeichnungen zeigen in
- Figur 1a: eine Schließeinheit einer Spritzgießmaschine in schematischer Darstellung, anhand der das erfindungsgemäße Verfahren erläutert wird,
- Figur 1b: die Schließeinheit aus Figur 1a in geschlossener Position,
- Figur 1c: eine Schließeinheit wie in Fig. 1a dargestellt in schematischer Darstellung, der zwei Plastifizier- und Einspritzeinheiten zugeordnet sind, wobei die Schließeinheit geschlossen ist,
- Figur 1d: die schematisch dargestellte Schließeinheit gemäß Fig. 1c in offener Stellung,
- Figur 1e: eine schematisch dargestellte Schließeinheit wie in Fig. 1c, wobei nunmehr zwei Mischköpfe von einer Polyurethan-Anlage versorgt werden,
- Figur 2a: eine weitere Ausführungsform einer schematisch dargestellten Schließeinheit einer Spritzgießmaschine mit einer Schiebetischanwendung in einer ersten Position, anhand der eine weitere Ausführungsform des erfindungsgemäßen Verfahrens erläutert wird,
- Figur 2b: die Ausführungsform gemäß Fig. 2a einer schematisch dargestellten Schließeinheit einer Spritzgießmaschine in einer zweiten Position,
- Figur 3: eine weitere Ausführungsform einer Schließeinheit in schematischer Darstellung in einer schematischen Darstellung mit einer Drehtischanwendung, mit der eine weitere Ausführungsform eines erfindungsgemäßen Verfahrens dargestellt wird und
- Figur 4a und 4b: eine schematische Draufsichten auf die Aufspannplatten der Schließeinheit aus Figur 3.

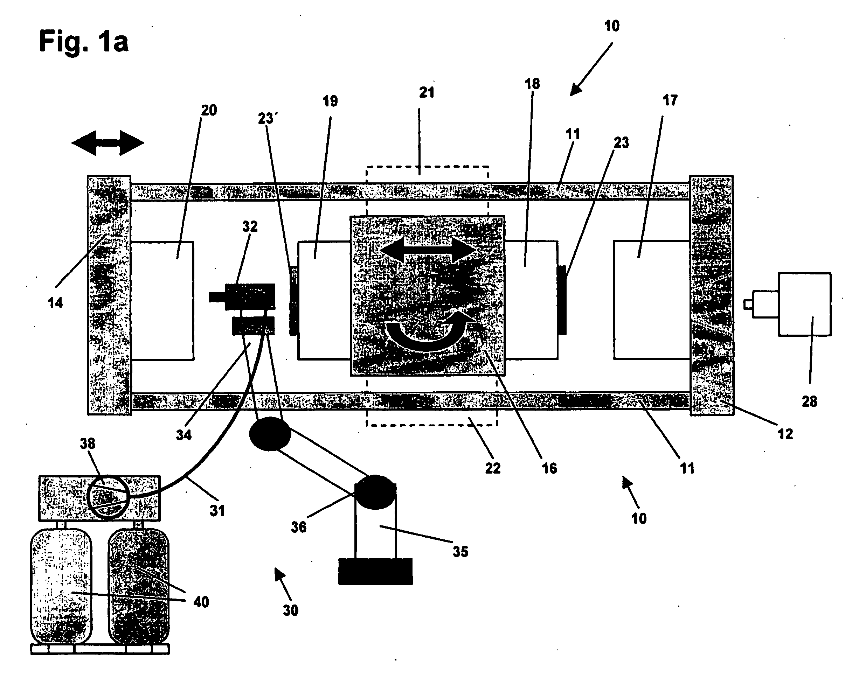

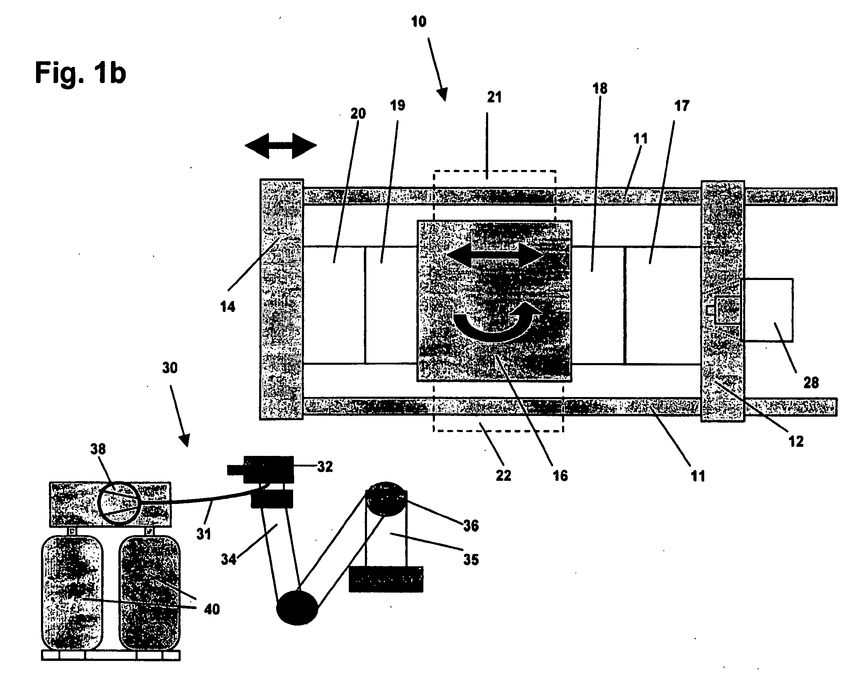

In den Figuren 1a und 1b sind schematische Darstellungen einer Schließeinheit 10 in geöffneter (Figur 1a) und geschlossener (Figur 1b) Position dargestellt. Die Gesamtanlage sollte neben der Schließeinheit 10 zudem noch eine Plastifizier- und Einspritzeinrichtung sowie eine Polyurethan-Einheit aufweisen, die vorliegend lediglich schematisch mit den Bezugsziffern 28 und 30 angedeutet sind. Diese sehr grobe Skizzierung ist für die Beschreibung des erfindungsgemäßen Verfahrens jedoch ausreichend. Die Schließeinheit kann dabei Bestandteil einer Standard-Spritzgießmaschine sein.

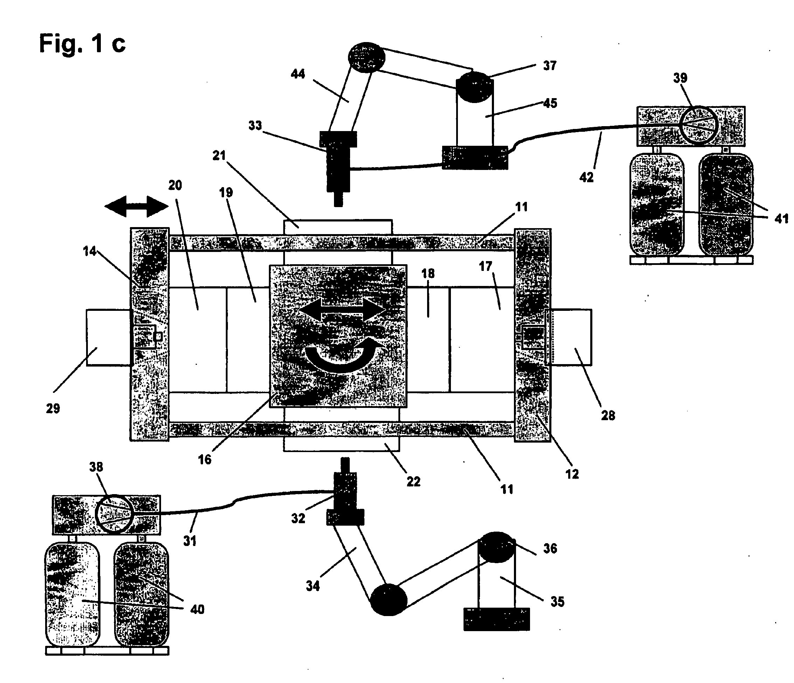

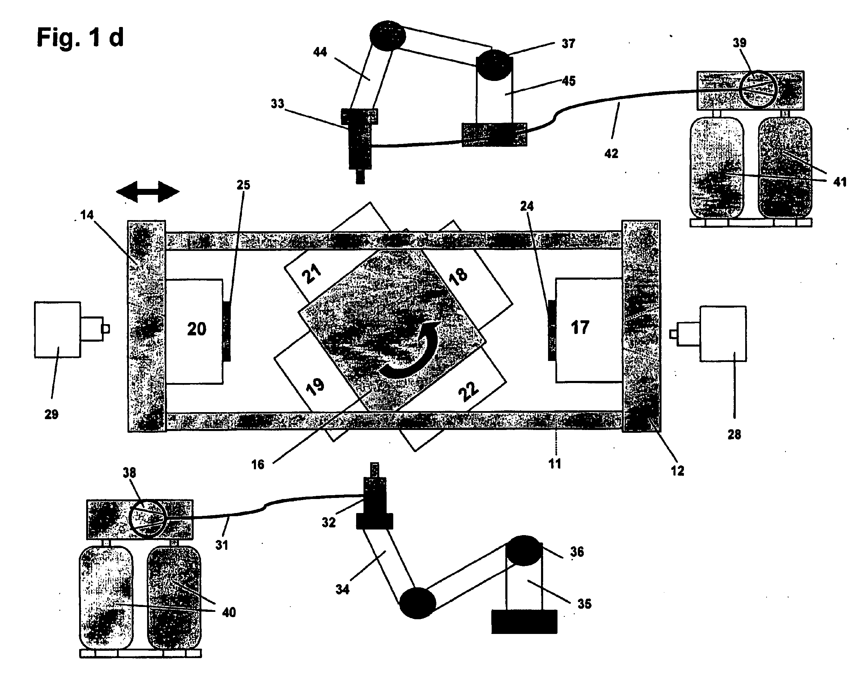

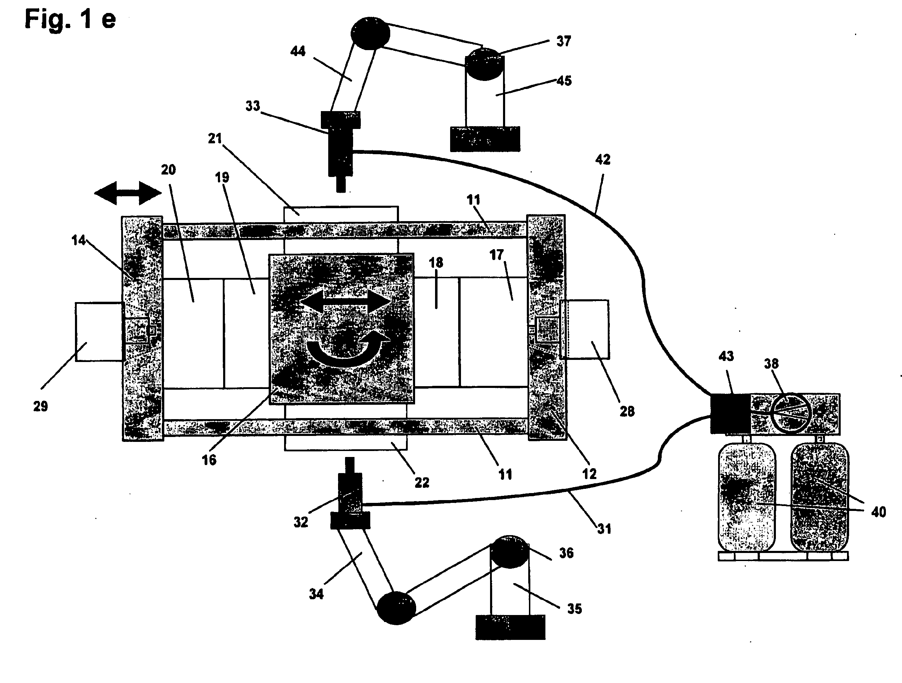

Die Schließeinheit 10 der Figuren 1 a und 1 b umfasst eine zentrale Wendeplatte 16, die um eine vertikale Achse drehbar ausgebildet ist (angedeutet durch Rotationspfeil). Die Wendeplatte 16 ist unten (nicht dargestellt) auf einem Maschinenbett zudem axial verschiebbar gehalten (angedeutet durch Doppelpfeil).

An den Seiten der würfelförmig ausgestalteten Wendeplatte 16 sind Formwerkzeughälften befestigt, wobei in Figur 1a und 1b die beiden gegenüberliegenden Formhälften 18 und 19 mit durchgezogener Linie ausgeführt sind. Zwei weitere Formwerkzeughälften 21 und 22 sind lediglich mit gestrichelter Linie dargestellt, da sie optional sind und weggelassen werden können.

Die Wendeplatte 16 ist zwischen zwei Formaufspannplatten 12 und 14 aufgenommen, wobei die Formaufspannplatte 14, wie mit dem Doppelpfeil angedeutet, hin und her verschieblich ausgeführt ist. Die Formaufspannplatte 12 ist fest angeordnet. Die Antriebe für die Formaufspannplatte 14 und die Wendeplatte 16 sind vorliegend nicht dargestellt.

Zwischen den beiden Aufspannplatten 12 und 14 sind 4 Holme 11 angeordnet, von denen in den Figuren lediglich zwei zu erkennen sind. An beiden Formaufspannplatten 12 und 14 sind Formwerkzeughälften 17 und 22 befestigt, welche mit den jeweils gegenüber liegenden Formwerkzeughälften der Wendeplatte 16 in geschlossenem Zustand der Schließeinheit zur Ausbildung jeweils einer Kavität zusammenwirken.

In den Figuren 1a und 1b rechts außerhalb der Formaufspannplatte 12 ist nur schematisch das vordere Ende einer Plastifizier- und Einspritzeinheit 28 angedeutet, mit welcher eine plastische Kunststoffschmelze erzeugt und in die Kavität des Formwerkzeugs bestehend aus den Formwerkzeughälften 17 und 18 eingebracht werden kann.

Dem in den Figuren 1a und 1b linken Formwerkzeug (hier: Formwerkzeughälften 19 und 20) ist die Polyurethan-Einheit 30 zugeordnet, welche einen Mischkopf 32 umfasst, der am vorderen Ende eines beweglichen ersten Robotarms 34 eines ersten Roboters 35 befestigt ist. Der erste Robotarm 34 ist über einen Betätigungs- und Befestigungsbock 36 am Boden oder an der Wand fixiert.

Der Mischkopf 32 erhält aus einem oder mehreren Behältnissen 40 über eine oder mehrere Pumpe 38 und entsprechende Versorgungsleitungen 31 (auch Mediumleitungen genannt) ein Polyurethan-Material bzw. verschiedene Polyurethan-Ausgangsmaterialien, die in einer Mischkammer des Mischkopfes 32 vermischt und anschließend aus dem Mischkopf ausgebracht (z. B. aufgesprüht) werden. Der Mischkopf 32 ist mittels des beweglichen ersten Robotarms 34 (wie in Figur 1a dargestellt) in den Raum zwischen die zwei Formhälften 19, 20 der geöffneten Schließeinheit hinein verfahrbar oder (wie in Figur 1b dargestellt) außerhalb der Schließeinrichtung positionierbar.

Das mit der in den figuren 1a und 1b gezeigten Schließeinheit durchgeführte Verfahren wird nachfolgend beschrieben:

Die Schließeinheit 10 kann durch Bewegen der Aufspannplatten 12 und 14 zwischen einer geöffneten Position (Figur 1a) und einer geschlossenen Position (Figur 1b) verfahren werden. In der geschlossenen Position (Fig. 1b) bilden sich zwischen den Formwerkzeughälften 17 und 18 bzw. 19 und 20 Formkavitäten aus, die nur schematisch strichliniert angedeutet sind.

Zunächst wird in der Position der Figur 1b nach dem Andocken der Plastifizier- und Einspritzeinheit 28 an das Formwerkzeug mit den Formwerkzeughälften 17 und 18 eine Schmelze in die Kavität des so gebildeten Formwerkzeugs eingespritzt. Auf diese Art und Weise wird ein thermoplastischer Vorformling erzeugt, welcher zumindest teilweise aushärtet, bevor die Schließeinheit 10 wieder geöffnet wird.

In Figur 1a ist die nach einem solchen Einspritzvorgang geöffnete Schließeinheit 10 dargestellt, wobei ein Vorformling 23 weiter in der Formhälfte 18 positioniert ist.

Nach dem Öffnen der Schließeinheit 10 wird der Mischkopf 32 mittels des Robotarms 34 in den Zwischenraum zwischen den Formwerkzeughälften 19 und 20 zum Besprühen der Kavitätsoberfläche der Formwerkzeughälfte 20 mit einem Potyurethan-Material gebracht. Gleichzeitig dreht die Wendeplatte 16 zunächst um 90° gegen den Uhrzeigersinn, um das bereits fertiggestellte Verbundteil 23' aus dem Bereich der Schließeinheit herauszubewegen und besser aus der Kavität der Formwerkzeughälfte 19 entnehmen zu können. Eine entsprechende Entnahmevorrichtung ist in den Figuren nicht dargestellt. Sodann wird die Wendeplatte 16 weiter um 90° gegen den Uhrzeigersinn gedreht, so dass nunmehr die Formwerkzeughälfte 18 zusammen mit dem Vorspritzling 23 gegenüber der Formwerkzeughälfte 20 zu liegen kommt, welche mit dem Polyurethanmaterial besprüht worden ist.

Andererseits ist nunmehr - nach einer 180° Drehung - die leere Kavität der Formwerkzeughälfte 19 gegenüberliegend der Formwerkzeughälfte 17 positioniert. Nach dem Zurückziehen des Robotarmes 34 wird die Schließeinheit 10 wieder geschlossen. Während des Schließvorgangs wird das auf der Kavitätsoberfläche der Formwerkzeughälfte 20 aufgebrachte noch, nicht ausreagierte Polyurethanmaterial auf den Vorspritzling gedrückt und verteilt sich somit in dem durch die Kavität definierten Bereich über die Oberfläche des Vorformlings 23. Parallel wird bei vollständig geschlossener Schließeinheit 10 in das geschlossene Formwerkzeug auf der gegenüberliegenden Seite wiederum thermoplastische Kunststoffschmelze eingebracht.

Nachdem zumindest teilweisen Ausreagieren des Polyurethanmaterials auf dem Vorformling sowie dem zumindest teilweisen Aushärten des thermoplastischen Substrats im anderen Formwerkzeug (Formwerkzeughälften 17 und 18) wird die Schließeinheit 10 wieder geöffnet und wie oben beschrieben weiter verfahren, d.h. die Wendeplatte wird zunächst um 90° gedreht, das fertiggestellte Verbundteil entnommen und sodann um weitere 90° gegen den Uhrzeigersinn verdreht. Wiederum wird die Kavitätsoberfläche der Formwerkzeughälfte mit Polyurethanmaterial besprüht und ein erneuter Schließvorgang gestartet.

So können bei jedem Schließvorgang zyklusgleich ein thermoplastisches Substratmaterial (Vorspritzling) wie auch ein fertiges Verbundteil hergestellt werden. Der Vorteil ist nun darin zu finden, dass während des Zusammenfahrens der beiden Formwerkzeughälften 19 und 20 ein Entlüftungsvorgang der Kavität sichergestellt ist und das Polyurethanmaterial gleichmäßig auf den Vorspritzling aufgeprägt wird.

Natürlich kann das mit Bezug auf die Figuren 1a und 1b beschriebene Verfahren noch weiter ausgebaut werden. Beispielsweise können bei der Verwendung von vier gleichen Formwerkzeughälften 18, 19, 21 und 22 weitere Arbeitsschritte hinzugefügt werden. So kann an der Position der Formwerkzeughälfte 21 ein Aktivierungsvorgang für die Oberfläche des thermoplastischen Substrats durchgeführt werden. Dafür eignen sich ein Plasmabehandlungsvorgang, ein Beflammungsvorgang oder ein Beschichtungsvorgang in hervorragender Weise. Auch kann vor dem Aufbringen des Polyurethanmaterials auf die Kavitätsoberfläche der Formwerkzeughälfte 20 zunächst mit einer (nicht dargestellten) Vorrichtung ein Trennmittel auf die Kavitätsoberfläche aufgetragen werden, so dass sich das Polyurethan-Material auch nach dessen teilweisen oder vollständigen Ausreagieren wieder gut von der Kavitätsoberfläche lösen lässt. Sodann kann auch die Polyurethan-Einheit auf verschiedene Arten und Weisen ausgebildet sein. Es können verschiedenste Materialien vermischt sowie Umschaltmöglichkeiten vorgesehen sein, so dass unterschiedliche Materialkombinationen nacheinander ausgetragen werden können. Dadurch ist es möglich, Bereiche mit unterschiedlichen Eigenschaften, beispielsweise verschiedenen farblichen Oberflächen, verschiedenen Verstärkungsstrukturen, verschiedenen Haptiken usw. auszubilden.

Alternativ oder zusätzlich zum Aufbringen eines Trennmittels kann auch eine Lackschicht auf die Kavitätsoberfläche des Polyurethan-Formwerkzeugs 20 aufgebracht werden.

Analog der Werkzeugtechnik für das Expansionsprägen können optional Spannrahmensysteme in das Werkzeug integriert sein. Bevor das Formwerkzeug bestehend aus den Formwerkzeughälften 19 und 20 komplett geschlossen wird bzw. bevor das Polyurethan-Material mit dem thermoplastischen Substrat in Kontakt kommt, kann dieser Spannrahmen die Werkzeugkavität verschließen und so gegenüber der Außenumgebung im wesentlichen abdichten. Dadurch kann das Polyurethan-Material nicht in die Werkzeügtrennebene gedrückt werden und verbleibt in der Kavität. Durch den Prägevorgang wird aber in vorteilhafter Weise die Luft aus der Kavität herausgedrückt, so dass eine gratfreie Fertigung von Verbundteilen gewährleistet ist.

Alternativ zu dem anhand der Figuren 1a und 1b beschriebenen Verfahren kann der Aufbringvorgang des Polyurethans auch extern auf eine Folie erfolgen. Die besprühte Folie kann dann mittels einer Handlingsapparatur in die Kavität der Formwerkzeughälfte 20 eingelegt werden. Dazu kann die Folie beispielsweise auf einem Spannrahmen fixiert sein. Dieser Spannrahmen wird komplett in die Polyurethan-Werkzeughälfte eingesetzt. Vorteilhaft hierbei ist, dass die Polyurethan-Formwerkzeughälfte nicht mit Trennmittel besprüht werden muss, da die Folie selbst als Trennmittel agieren kann. Zudem kann der Sprühvorgang auf die Folie in einer separaten Kabine neben der Spritzgießmaschine erfolgen: Der Sprühvorgang auf die Folie kann parallel zum Injektionszyklus erfolgen, so dass die Zykluszeit weiter reduzierbar ist. Nicht zuletzt ist der Sprühvorgang bei der Verwendung einer Folie auch in horizontal ausgerichteter Weise möglich, so dass kein Verlaufen oder ein Abrutschen der PUR-Schicht zu befürchten ist. Zu beachten ist jedoch, dass das Polyurethan-Material in nicht ausreagierten Zustand mit der Folie in die Kavität der Formwerkzeughälfte 20 eingebracht und dann wieder auf das thermoplastische Substrat aufgedrückt wird.

Bei kleineren Formwerkzeugen ist es überdies möglich, die Werkzeughälfte in jedem Zyklus zu tauschen. Alternativ kann dafür auch ein Einsatz für eine Formwerkzeughälfte vorgesehen sein. Bei dieser Vorgehensweise würde die extern besprüht Kavitätsoberfläche bzw. der Einsatz mit der Polyurethan-Werkzeughälfte zunächst auf der Aufspannplatte oder der Formwerkzeughälfte fixiert, und zwar mittels eines mechanischen oder hydraulischen Schnellspannsystems. Auch kann eine Fixierung mit der bekannten Tandemtechnologie über Bajonettsystem erfolgen. Parallel kann bei einer anderen Werkzeughälfte oder einem anderen Einsatz die Oberfläche gereinigt, eingetrennt, ggf. lackiert und mit einem PUR-System besprüht werden.

Nach Entnahme der Bauteile erfolgt das Auswechseln der Polyurethan-Formwerkzeughälfte. Auch kann die Formwerkzeughälfte zusammen mit dem Bauteil entnommen und das Bauteil erst anschließend entformt werden.

Ein Austausch einer Formwerkzeughälfte 20 bzw. die Verwendung eines entsprechenden Einsatzes für die Formwerkzeughälfte 20 würde auch eine unterschiedliche Oberflächenstruktur von Schuss zu Schuss ermöglichen. Überdies könnte das Einbringen von Trennmittellack und PUR-Sprühsystem in einer abgeschlossenen Kabine erfolgen.

Eine etwas abgeänderte Ausführungsform für ein alternatives Verfahren ist in den Figuren 1c und 1d dargestellt. Dabei bezeichnen die gleichen Bezugszeichen die selben, in den Fig. 1a und 1b gezeigten Elemente der Anlage.

Wiederum ist eine Schließeinheit 10 mit einer festen 12, einer beweglichen 14 und einer Wendeplatte 16 (drehbar und axial beweglich) dargestellt, wobei nunmehr an jeder Seite der Wendeplatte 16 eine Formwerkzeughälfte 18, 19, 21 und 22 angeordnet sind. Im Unterschied zur Anlage in den Figuren 1a und 1b sind nunmehr zwei Plastifizier- und Einspritzeinheiten 28 und 29 zum Ausbilden von Vorspritzlingen in den Kavitäten der Formwerkzeughälften 17 und 18 bzw. 19 und 20 vorgesehen. Zudem sind nun nicht nur eine PUR-Anlage, sondern zwei PUR-Anlagen mit Mischköpfen 32, 33, Robotarmen 34, 44 von Robotern 35, 45, die stabil befestigt sind (Befestigungen 36 und 37), Behältern 40, 41, Pumpen 38, 39 und PUR-Medienleitungen 31, 42 vorgesehen.

Mit dieser Anlage wird in einem anderen Verfahrensablauf gearbeitet. So werden im ersten Takt (Fig. 1c) in den geschlossenen Kavitäten der Formwerkzeuge 17 und 18 bzw. 19 und 20 zunächst zwei Vorspritzlinge geformt. Gleichzeitig wird mittels der Mischköpfe 32 und 33 Polyurethan-Material auf die Kavitätsoberflächen der Formwerkzeughälften 21 und 22 ausgesprüht. Dieser Vorgang kann parallel zum Einbringen und Aushärten des Material für die Vorspritzlinge geschehen. Sind die Vorspritzlinge 24 und 25 ausreichend ausgehärtet, so wird die Schließeinheit 10 geöffnet, wobei die Vorspritzlinge 24 und 25 in den Formwerkzeughälften 17 bzw. 20 verbleiben, und die Wendeplatte um 90° gegen den Uhrzeigersinn gedreht. Anschließend wir die Schließeinheit wieder geschlossen, wodurch sich das noch nicht ausgehärtete Polyurethan-Material auf die in den Formwerkzeughälften 17 und 20 verbliebenen Vorspritzlinge aufpresst. Nachdem das Polyurethan-Material zumindest teilweise ausgehärtet ist, kann die Schließeinheit wieder geöffnet werden und die fertigen Produkte sind zu entnehmen. Anschließend wird die Wendeplatte wieder 90° zurück- oder weitergedreht und der Zyklus wiederholt sich. Auf diese Weise können mit einer Standard-Maschine zyklusgleich jeweils 2 Produkte hergestellt werden. Dieses Produktionsweise ist insbesondere dann günstig, wenn beispielsweise zwei spiegelbildlich symmetrische Stücke herzustellen sind.

Die Ausführungsform in Figur 1e unterscheidet sich von derjenigen in den Figuren 1 c und 1d lediglich dadurch, dass die beiden Mischköpfe 32 und 33 von einer Polyurethananlage mit Behältern 40 und Pumpe 38 versorgt werden. Dabei ist eine Umschalteinheit 43 zur wechselweisen Versorgung der beiden Mischköpfe 32 und 33 vorgesehen. Diese Ausführungsform eignet sich besonders dann, wenn der Sprühvorgang zum Aufbringen des Polyurethan-Materials im Vergleich zum Herstellen der Vorformlinge nur kurz ist. Dann reicht die Zeit zum Besprühen der Kavitätsoberflächem auch mit nur einer PUR-Anlage aus.

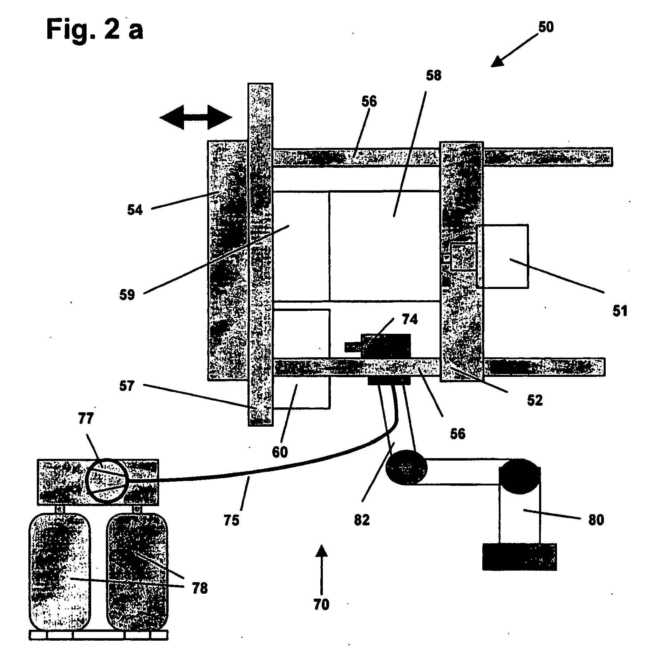

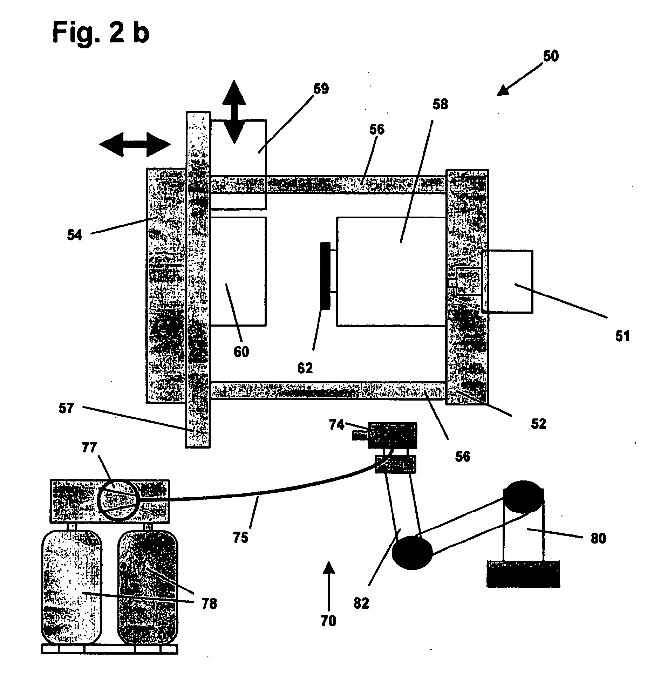

Eine weitere Ausführungsform einer Schließeinheit einer Spritzgießmaschine, mit der eine weitere Ausführungsform des erfindungsgemäßen Verfahrens realisiert werden kann, ist in den Figuren 2a und 2b dargestellt.

In diesen Figuren ist eine Schließeinheit 50 mit einer festen Formaufspannplatte 52 und einer beweglichen Formaufspannplatte 54 gezeigt. Die bewegliche Formaufspannplatte 54 ist über vier Holme 56 beweglich geführt. Einer Einspritzöffnung der festen Formaufspannplatte 52 ist der endseitige Teil einer Pastifizier- und Einspritzeinheit 51 zugeordnet.

An der beweglichen Formaufspannplatte 54 ist schematisch eine Schiebetischanordnung 57 befestigt, die sich - wie in Figur 2 mit Doppelpfeil angedeutet - nach oben und unten verschieben lässt. Die Schiebetischanordnung 57 trägt zwei Formwerkzeughälften 59 und 60.

An der festen Formaufspannplatte 52 ist eine weitere Formwerkzeughälfte 58 angeordnet. Diese formwerkzeughälfte 58 kann je nach Position der Schiebetischanordnung 57 mit der Formwerkzeughälfte 59 oder mit der Formwerkzeughälfte 60 zusammenwirken.

In Figuren 2a und 2b ist schematisch auch eine Polyurethan-Einheit 70 angedeutet, die einen Mischkopf 74 aufweist, der über eine Versorgungsleitung 75 von einem oder mehreren Behältern 78 mittels einer oder mehrerer Pumpen 77 Ausgangsmaterial erhält. Dieses Material wird im Mischkopf 74 zusammenmischt und ausgebracht.

Wiederum ist der am vorderen Ende eines Robotarms 82 angeordnete Mischkopf 74 mittels eines Roboters 80 bewegbar.

Das erfindungsgemäße Verfahren mit der in dem Figuren 2a und 2b gezeigten Vorrichtung läuft nun wie folgt ab:

Zunächst sind alle Formwerkzeughälften leer und die Schließvorrichtung 50 befindet sich in geöffnetem Zustand. Anschließend wird die Schließeinheit 50 geschlossen und die Formaufspannplatte 54 nach rechts verfahren, so dass die Formwerkzeughälfte 59 unter Ausbildung einer ersten Kavität auf der Formwerkzeughälfte 58 zu liegen kommt. In dieser Position kann ein plastisches Kunststoffmaterial mittels der Plastifizier- und Einspritzvorrichtung 51 in die Kavität eingefüllt werden.

Gleichzeitig kann ein Polyurethan-Material mittels dem Mischkopf 74 auf die Kavitätsoberfläche der Formwerkzeughälfte 60 aufgebracht werden. Nach dem zumindest teilweisen Aushärten des thermoplastischen Substratmaterials (Vorformlings) in der Kavität der beiden Formwerkzeughälften 58 und 59 wird die Schließeinheit 50 geöffnet. Dabei verbleibt der Vorspritzling in der Formwerkzeughälfte 58. Anschließend wird der Schiebetisch nach oben verfahren, so dass die mit dem Polyurethan-Material versehene Formwerkzeughälfte 60 genau gegenüber der Formwerkzeughälfte 58 zu liegen kommt. Nun wird die Schließeinheit 50 wieder geschlossen, wodurch sich in der Endphase der Bewegung das Polyurethan-Material gegen den Vorspritzling in einer zweiten Kavität anpresst. Nach dem zumindest teilweisen Aushärten des PolyurethanMaterials wird die Formaufspannplatte wieder geöffnet und der Schiebetisch 57 nach unten verfahren. Nunmehr kann das fertige Verbundteil entnommen und ein neuer Zyklus gestartet werden.

Auch bei dieser Ausführungsform kann mit einem Einlegerteil für die Formwerkzeughälfte 60 oder mit einer Folie als Trägerschicht gearbeitet werden. Insofern unterscheidet sich die Ausführungsform hinsichtlich derjenigen in Figur 2a und 2b von derjenigen in Figur 1a und 1b lediglich dadurch, dass anstelle einer Wendeplattenanordnung nun ein Schiebetisch eingesetzt ist.

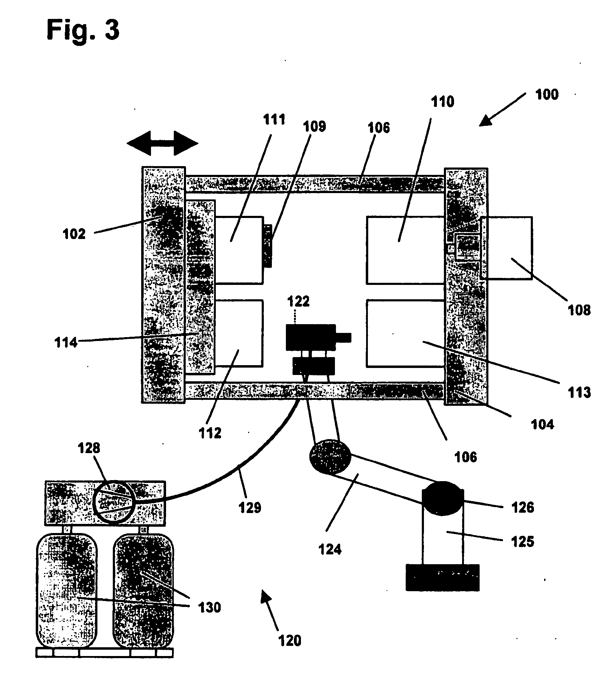

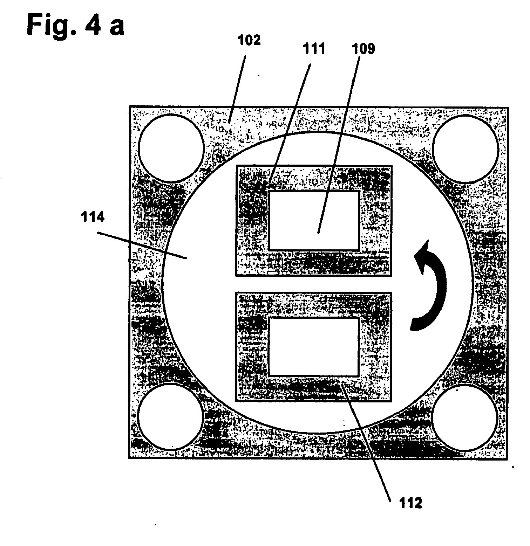

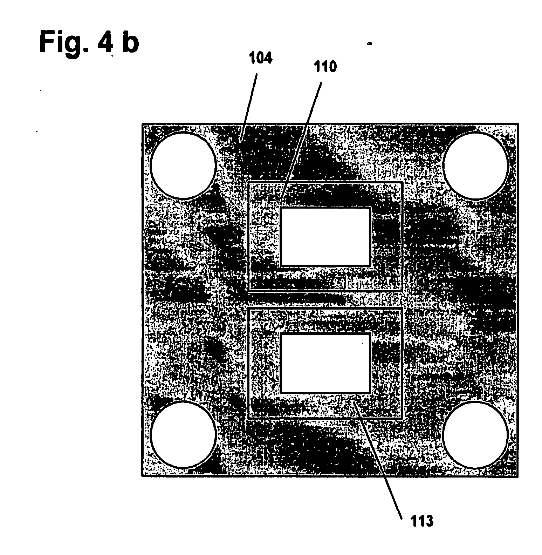

Eine weitere Ausführungsform, nunmehr unter Einsatz eines Drehtisches, ist anhand der Figuren 3 sowie 4a und 4b beschrieben. In diesen Figuren ist eine Schließeinheit 100 mit einer festen 104 und einer beweglichen Formaufspannplatte 102 dargestellt, wobei sich die bewegliche Formaufspannplatte 102 an vier Holmen 106 hin und her verfahren lässt. Die bewegliche Formaufspannplatte 102 trägt überdies eine Drehtischanordnung 114, auf der zwei Formhälften 111 und 112 angeordnet sind. Gegenüberliegend auf der festen Formaufspannplatte 104 sind ebenfalls zwei Formhälften 110 und 113 ausgebildet.

Wiederum ist eine Plastifizier- und Einspritzeinheit 108 vorgesehen, mit der ein plastisches Schmelzematerial in die Kavität eines geschlossenen, aus den Formhälften 110 und 111 bestehenden Formwerkzeug eingebracht werden kann.

Überdies ist auch bei dieser Ausführungsform eine Polyurethan-Einheit 120 vorgesehen, die einen Mischkopf 122 aufweist, der an einem beweglichen Robotarm 124 angeordnet ist. Der Robotarm 124 ist an einem Bock 126 beweglich betätigbar befestigt. Der Mischkopf 122 erhält von Pumpen 128 und Behältnissen 130 über die Versorgungsleitung oder mehrere Versorgungsleitungen die entsprechenden Ausgangsmaterialien, vermischt diese und bringt das Gemisch auf eine Kavitätsoberfläche aus.

Der Ablauf der erfindungsgemäßen Verfahrens bei dieser dritten Ausführungsform ist nun wie folgt:

Nach dem Herausfahren des Robotarms 124 aus dem Zwischenraum zwischen den beiden Aufspannplatten 102 und 104 wird nach dem Schließen der Schließeinheit 100 in eine noch leere Kavität des Formwerkzeugs bestehend aus den Formwerkzeughälften 110 und 111 durch Andocken der Plastifizier- und Einspritzeinrichtung 108 eine Schmelze eingefüllt. Nachdem die thermoplastische Kunststoffschmelze zumindest teilweise ausgehärtet ist, wird die Schließeinheit 100 durch Auffahren der beweglichen Formaufspannplatte 102 geöffnet, wobei (wie in Figur 3 schematisch angedeutet ist) der Vorspritzling 109 in der Formwerkzeughälfte 111 aufgenommen bleibt und zusammen mit der beweglichen Aufspannplatte 102 nach links verfährt. Nach dem Öffnen der Schließeinheit 100 wird der Mischkopf 122 der Polyurethan-Einheit 120 vor die Kavitätsoberfläche der Formwerkzeughälfte 113 gefahren, um ein Polyurethan-Material auf die Kavitätsoberfläche auszubringen. Parallel wird die Drehtischanordnung 114 gedreht, so dass nunmehr die mit dem Vorspritzling versehene Formwerkzeughälfte 111 gegenüberliegend der mit dem noch nicht ausreagierten Polyurethan beschichteten Formwerkzeughälfte 113 zu liegen kommt. Nach dem Zurückverfahren des Robotarms 124 kann die Schließeinheit 100 wieder geschlossen werden, wodurch sich das Polyurethan-Material auf den Vorspritzling aufdrückt und diesen im Rahmen des Kavitätsraums beschichtet. Parallel wird in dem oberen Formwerkzeug der Figur 3 wieder ein Vorformling gebildet.

Nach dem nochmaligen Öffnen der Schließeinheit 100 kann nun zunächst das fertige Verbundteil aus der Formwerkzeughälfte 112 oder der Formwerkzeughälfte 113 entnommen werden. Gleichzeitig kann wiederum die Drehtischanordnung 114 gedreht und ein neuer Zyklusvorgang gestartet werden. Auf diese Art und Weise wird in der Anordnung in Figur 3 im oberen Bereich bei jedem Zyklus ein Vorspritzling gebildet und im unteren Bereich ein aus dem Vorspritzling und dem beschichteten PolyurethanMaterial gebildetes Verbundteil.

Wie auch oben bereits bei den oben beschriebenen Verfahrensvarianten erwähnt, können noch zusätzliche Einheiten und Ausstattungen der Anlage hinzugefügt werden. Beispielsweise kann noch eine Einheit zur Aufbringung eines Trennmittels auf die Kavitätsoberfläche der Formwerkzeughälfte 113 vorgesehen sein. Sodann können weitere Einheiten zur Reinigung der Kavitätsoberflächen oder zur Entnahme einzelner Teile (beispielsweise des Verbundteils) vorgesehen sein. Auch kann die Polyurethan-Einheit 120 selbst in unterschiedlicher ausgebildet sein, so dass Polyurethan-Materialien mit den verschiedensten Eigenschaften parallel oder nacheinander auf die Kavitätsoberfläche der Formwerkzeughälfte 113 aufbringbar sind.

Bei der Ausführungsform in Figur 3 sind die beiden Formwerkzeughälften 112 und 111 identisch ausgebildet. Die Formwerkzeughälften 110 und 113 sind unterschiedlich ausgebildet.

Insgesamt ermöglicht die vorliegende Erfindung eine Nutzung der Polyurethan-Sprühtechnologie bei der Herstellung von mehrkomponentigen Verbundbauteilen mit hochwertigen Polyurethan-Oberflächenstrukturen. Darüber hinaus kann durch das Niederdruckverfahren ein geringer Werkzeugverschleiß, insbesondere an der Werkzeugtrennebene, sichergestellt werde. Mit dem beschriebenen Verprägen ist auch eine sehr dünnwandige Ausbildung einer Polyurethan-Schicht auf einem Thermoplastträger möglich. Im Gegensatz zu den bisher bekannten Verfahren sind dabei keine Entlüftungskavitäten notwendig. Dies ermöglicht eine größere Designfreiheit. Auch kann man die verschiedensten Techniken miteinander kombinieren, so dass bekannte Verfahren wie z.B. die Long-Fibre-Injection-Technologie (der Einsatz von Fasern in einem Polyurethan-Material) mit integriert werden können.

### Bezugszeichenliste

- 10: Schließeinheit
- 12: Erste bewegliche Aufspannplatte
- 14: Erste bewegliche Aufspannplatte
- 16: Drehplatte
- 17: Erste Formwerkzeughälfte
- 18: Zweite Formwerkzeughälfte
- 19: Dritte Formwerkzeughälfte
- 20: Vierte Formwerkzeughälfte
- 21: Fünfte Formwerkzeughälfte
- 22: Sechste Formwerkzeughälfte
- 23: Vorformling
- 23': Fertigbauteil, Verbundbauteil
- 24: Vorformling 1
- 25: Vorformling 2
- 28: Plastifiziereinheit 1
- 29: Plastifiziereinheit 2
- 30: Polyurethan-Einheit
- 31: PUR - Mediumleitung 1
- 32: Mischkopf 1
- 33: Mischkopf 2
- 34: Robotarm 1
- 35: Roboter 1
- 36: Befestigung Roboter 1
- 37: Befestigung Roboter 2
- 38: Pumpe PUR-Anlage 1
- 39: Pumpe PUR-Anlage 2
- 40: Behälter PUR-Anlage 1
- 41: Behälter PUR-Anlage 2
- 42: PUR-Medienleitung 2
- 43: Umschalteinheit für Mischkopf 1 und 2
- 44: Robotarm 2
- 45: Roboter 2
- 50: Schließeinheit
- 51: Plastifiziereinheit
- 52: Feste Formaufspannplatte (rechts)
- 54: Bewegliche Formaufspannplatte (links)
- 56: Holme
- 57: Schiebetisch
- 58: Erste Formhälfte (Takt 1 + 2)
- 59: Zweite Formhälfte (Position Takt 1)

- 60: Dritte Formhälfte (Takt 2)
- 62: Verbundbauteil
- 70: Polyurethan-Einheit
- 74: Mischkopf
- 75: PUR- Medienleitung
- 77: Pumpe
- 78: Behälter
- 80: Roboter
- 82: Robotarm

- 100: Schließeinheit
- 102: Bewegliche Formaufspannplatte
- 104: Feste Formaufspannplatte
- 106: Holme
- 108: Plastifiziereinheit
- 109: Vorspritzling (Takt 1)
- 110: Erste Formwerkzeughälfte
- 111: Zweite Formwerkzeughälfte
- 112: Dritte Formwerkzeughälfte
- 113: Vierte Formwerkzeughälfte
- 114: Drehtisch
- 120: Polyurethan-Einheit
- 122: Mischkopf
- 124: Robotarm
- 125: Roboter
- 126: Befestigung
- 128: Pumpe
- 129: PUR-Medienleitung
- 130: Behälter

## Patentansprüche

1. Verfahren zur Herstellung eines beschichteten Verbundbauteils mit den Schritten:
a) Herstellen eines thermoplastischen Kunststoffträgers (23, 24, 25) durch Einbringen einer Schmelze in eine geschlossene Kavität eines ersten Formwerkzeugs (17, 18; 58, 59),
b) anschließendes Öffnen des ersten Formwerkzeugs (17, 18; 58, 59), wobei der zuvor hergestellte thermoplastische Kunststoffträger (23, 24, 25) in einer Formwerkzeughälfte des ersten Formwerkzeugs positioniert bleibt,
c) Aufbringen einer Polyurethan-Schicht auf die Kavitätsoberfläche einer Formwerkzeughälfte (20, 21, 22, 60) eines PUR-Formwerkzeugs,
d) Zuordnung des thermoplastischen Kunststoffträgers (23, 24, 25) in der Formwerkzeughälfte des ersten Formwerkzeugs zu der mit der Polyurethan-Schicht versehenen Formwerkzeughälfte (20, 21, 22, 60) des PUR-Formwerkzeugs zur Formung eines zweiten Formwerkzeugs,
e) Schließen des zweiten Formwerkzeugs (17, 22; 19, 21; 58, 60) bestehend aus der Formwerkzeughälfte mit dem thermoplastischen Kunststoffträger (23, 24, 25) sowie der mit der Polyurethan-Schicht versehenen Formwerkzeughälfte (20; 21, 22; 60) unter Aufdrücken oder Aufprägen der Polyurethan-Schicht auf den thermoplastischen Kunststoffträger, wobei sich die Polyurethan-Schicht in dem durch die Kavität des zweiten Formwerkzeuges definierten Bereich über die Oberfläche des thermoplastischen Kunststoffträgers verteilt,
f) zumindest teilweises Ausreagieren der Polyurethan-Schicht,
g) Öffnen des zweiten Formwerkzeugs und
h) Entnahme des beschichteten Verbundbauteiles (23', 62).

2. Verfahren nach Anspruch 1,
**dadurch gekennzeichnet,**
**dass** der thermoplastische Kunststoffträger (23, 24, 25) vor dem Schließen des zweiten Formwerkzeugs zum Aufdrücken oder Aufprägen der Polyurethan-Schicht auf das Spritzgussteil in einer Formwerkzeughälfte des ersten Formwerkzeugs umgesetzt wird.

3. Verfahren nach Anspruch 1 oder 2,
**dadurch gekennzeichnet,**
**dass** das Aufbringen der Polyurethan-Schicht auf die Kavitätsoberfläche der Formwerkzeughälfte (20,21,22,60) zyklusgleich zum Einbringen der Schmelze in das erste Formwerkzeug (17, 18; 58, 59) erfolgt.

4. Verfahren nach Anspruch 1 oder 2,
**dadurch gekennzeichnet,**
**dass** das Aufbringen der Polyurethan-Schicht auf die Kavitätsoberfläche der Formwerkzeughälfte (20) nach dem Einbringen der Schmelze in das erste Formwerkzeug (17, 18) und dem nachfolgende Öffnen des ersten Formwerkzeug erfolgt.

5. Verfahren nach einem der Ansprüche 1 bis 4,
**dadurch gekennzeichnet**
**dass** das Aufbringen der Polyurethan-Schicht durch Aufsprühen des Materials auf die Kavitätsoberfläche erfolgt.

6. Verfahren nach einem der Ansprüche 1 bis 4,
**dadurch gekennzeichnet,**
**dass** das Aufbringen der Polyurethan-Schicht durch Auftragen des Polyurethans auf eine Trägerschicht erfolgt, die anschließend in die Kavitätsausnehmung der Formwerkzeughälfte eingelegt wird.

7. Verfahren nach Anspruch 6,
**dadurch gekennzeichnet,**
**dass** das Auftragen des Polyurethans auf die Trägerschicht in einer separaten Vorrichtung neben der Spritzgießmaschine zur Herstellung des thermoplastischen Kunststoffträgers erfolgt.

8. Verfahren nach Anspruch 6 oder 7,
**dadurch gekennzeichnet,**
**dass** als Trägerschicht eine Folie oder Dekor verwendet wird.

9. Verfahren nach Anspruch 8,
**dadurch gekennzeichnet,**
**dass** die Folie oder Dekor in einen Spannrahmen fixiert ist.

10. Verfahren nach einem der Ansprüche 5 bis 9,
**dadurch gekennzeichnet,**
**dass** die Polyurethan-Schicht mit einem beweglich ausgebildeten PUR-Mischkopf (32; 33; 74) auf die Kavitätsoberfläche oder die Trägerschicht aufgebracht wird.

11. Verfahren nach einem der vorhergehenden Ansprüche,
**dadurch gekennzeichnet,**
**dass** beim Einbringen der Polyurethan-Schicht Polyurethan-Materialien mit verschiedenen Eigenschaften gleichzeitig oder nacheinander auf die Kavitätsoberfläche aufgebracht werden.

12. Verfahren nach einem der vorhergehenden Ansprüche,
**dadurch gekennzeichnet,**
**dass** als Polyurethan-Material hochviskose oder hochgefüllte Polyurethan-Materialien verwendet werden.

13. Verfahren nach einem der vorhergehenden Ansprüche,
**dadurch gekennzeichnet,**
**dass** das Umsetzen der Spritzgießteile durch Verdrehen mit einem Drehtisch (114), einer Indexplattenanordnung oder einer Wendeplatte (16) oder durch Verschieben mit einem Schiebetisch (57) erfolgt.

14. Verfahren nach einem der vorhergehenden Ansprüche,
**dadurch gekennzeichnet,**
**dass** vor dem Einbringen des Polyurethan-Materials auf die Kavitätsoberfläche ein Trennmittel auf die Kavitätsoberfläche aufgetragen wird.

15. Verfahren nach einem der vorhergehenden Ansprüche,
**dadurch gekennzeichnet,**
**dass** die Trägerfolie oder das Dekor als Trennmedium verwendet wird.

16. Verfahren nach einem der vorhergehenden Ansprüche,
**dadurch gekennzeichnet,**
**dass** vor dem Aufbringen des Polyurethan-Materials auf die Kavitätsoberfläche eine Lackschicht auf die Kavitätsoberfläche aufgetragen wird.

17. Verfahren nach einem der vorhergehenden Ansprüche,
**dadurch gekennzeichnet,**
**dass** vor dem Aufbringen des Polyurethan-Materials auf die Kavitätsoberfläche ein Einlegermaterial in die Kavität eingelegt wird.

18. Verfahren nach einem der vorhergehenden Ansprüche,
**dadurch gekennzeichnet,**
**dass** ein Spannrahmen zwischen der den thermoplastischen Kunststoffträger aufweisenden Formwerkzeughälfte und der PUR-Formwerkzeughälfte verwendet wird, der die Kavität vor dem Aufdrücken oder Aufprägen des Polyurethan-Material auf das Spritzgussteil gegen die Außenumgebung abschließt.

19. Verfahren nach einem der vorhergehenden Ansprüche,
**dadurch gekennzeichnet,**
**dass** die Formwerkzeughälfte des PUR-Formwerkzeugs mit einem Einsatz ausgebildet ist, die Kavitätsausnehmung in dem Einsatz ausgebildet ist, wobei das Polyurethanmaterial auf die Kavitätsoberfläche des Einsatzes außerhalb der Schließeinheit aufgebracht wird und der Einsatz anschließend in die zweite Formwerkzeughälfte eingesetzt wird.

20. Verfahren nach Anspruch 19,
**dadurch gekennzeichnet,**
**dass** mehrere Einsätze für ein PUR-Formwerkzeug vorgesehen sind und verschiedene Einsätze nacheinander zum Einsetzen in die zugeordnete Formwerkzeughälfte verwendet werden.

21. Verfahren nach Anspruch 20,
**dadurch gekennzeichnet,**
**dass** zumindest zwei Einsätze mit einer unterschiedlichen Kavitätsausnehmung oder mit einer unterschiedlichen Kavitätsoberfläche ausgebildet sind.

22. Verfahren nach einem der Ansprüche 19 bis 21,
**dadurch gekennzeichnet,**
**dass** Schnellspann- oder Bajonettsysteme zur Fixierung des Einsatzes verwendet werden.

23. Verfahren nach einem der Ansprüche 19 bis 22,
**dadurch gekennzeichnet,**
**dass** der beschichtete thermoplastische Kunststoffträger zusammen mit dem Einsatz aus dem Formwerkzeug entnommen wird.

24. Verfahren nach einem der vorhergehenden Ansprüche,
**dadurch gekennzeichnet,**
**dass** für die PUR-Formwerkzeughälfte (20,21,22,60) als Werkstoff Stahl, Aluminium, Kunststoff oder Galvanoformen verwendet werden.

25. Verfahren nach einem der vorhergehenden Ansprüche;
**dadurch gekennzeichnet, dass**
in einem ersten Takt der thermoplastische Kunststoffträger (23, 24, 25) herstellt wird und gleichzeitig auf die Kavitätsoberfläche des PUR-Formwerkzeugs (20,21,22,60) das Polyurethan-Material aufgebracht wird,
dass nach dem ersten Takt und vor einem zweiten Takt die Zuordnung der Formwerkzeughälften erfolgt und
dass in einem zweiten Takt das Aufprägen der Polyurethanschicht auf den thermoplastischen Kunststoffträger erfolgt.

26. Verfahren nach Anspruch 25,
**dadurch gekennzeichnet,**
**dass** die Zuordnung durch Verdrehung der Formwerkzeughälften um 90° erfolgt.

27. Verfahren nach einem der vorhergehenden Ansprüche,
**dadurch gekennzeichnet,**
**dass** zumindest zwei PUR-Mischköpfe (32, 33) verwendet sind, welche abwechselnd aus einer PUR-Anlage (38, 40) mit einer Umschalteinheit (43) gespeist werden.

## Claims

1. A method for the production of a coated composite component
with the steps:
a) producing a thermoplastic plastic support (23, 24, 25) by introducing a melt into a closed cavity of a first mould (17, 18; 58, 59),
b) subsequent opening of the first mould (17, 18; 58, 59), wherein the previously produced thermoplastic plastic support (23, 24, 25) remains positioned in a mould half of the first mould,
c) applying a polyurethane layer onto the cavity surface of a mould half (20, 21, 22, 60) of a PUR mould,
d) associating the thermoplastic plastic support (23, 24, 25) in the mould half of the first mould with the mould half (20, 21, 22, 60) of the PUR mould provided with the polyurethane layer, to form a second mould,
e) closing of the second mould (17, 22; 19, 21; 58, 60) consisting of the mould half with the thermoplastic plastic support (23, 24, 25) and the mould half (20; 21, 22; 60) provided with the polyurethane layer with pressing or impressing of the polyurethane layer onto the thermoplastic plastic support, wherein the polyurethane layer in the region defined by the cavity of the second mould is distributed over the surface of the thermoplastic plastic support,
f) at least partial curing of the polyurethane layer,
g) opening of the second mould and
h) removing of the coated composite component (23', 62).

2. The method according to Claim 1,
**characterized in that**
the thermoplastic plastic support (23, 24, 25) is repositioned in a mould half of the first mould before the closing of the second mould for pressing or impressing the polyurethane layer onto the injection moulded part.

3. The method according to Claim 1 or 2,
**characterized in that**
the application of the polyurethane layer onto the cavity surface of the mould half (20, 21, 22, 60) takes place in the same cycle as the introduction of the melt into the first mould (17, 18; 58, 59).

4. The method according to Claim 1 or 2,
**characterized in that**
the application of the polyurethane layer onto the cavity surface of the mould half (20) takes place after the introduction of the melt into the first mould (17, 18) and the subsequent opening of the first mould.

5. The method according to one of Claims 1 to 4,
**characterized in that**
the application of the polyurethane layer takes place by spraying the material onto the cavity surface.

6. The method according to one of Claims 1 to 4,
**characterized in that**
the application of the polyurethane layer takes place by coating the polyurethane onto a support layer, which is subsequently inserted into the cavity recess of the mould half.

7. The method according to Claim 6,
**characterized in that**
the coating of the polyurethane onto the support layer takes place in a separate device adjacent to the injection moulding machine for the production of the thermoplastic plastic support.

8. The method according to Claim 6 or 7,
**characterized in that**
a foil or decoration is used as support layer.

9. The method according to Claim 8,
**characterized in that**
the foil or decoration is fixed in a clamping frame.

10. The method according to one of Claims 5 to 9,
**characterized in that**
the polyurethane layer is applied onto the cavity surface or the support layer with a movably constructed PUR mixing head (32; 33; 74).

11. The method according to one of the preceding claims,
**characterized in that**
on introduction of the polyurethane layer, polyurethane materials with different properties are applied simultaneously or in succession onto the cavity surface.

12. The method according to one of the preceding claims,
**characterized in that**
highly viscous or highly loaded polyurethane materials are used as polyurethane material.

13. The method according to one of the preceding claims,
**characterized in that**
the repositioning of the injection moulded parts takes place by rotation with a rotary table (114), an indexing plate arrangement or a turning plate (16) or by displacing with a sliding table (57).

14. The method according to one of the preceding claims,
**characterized in that**
before the introduction of the polyurethane material onto the cavity surface, a release agent is applied onto the cavity surface.

15. The method according to one of the preceding claims,
**characterized in that**
the support foil or the decoration is used as release medium.

16. The method according to one of the preceding claims,
**characterized in that**
before the application of the polyurethane material onto the cavity surface, a layer of lacquer is coated onto the cavity surface.

17. The method according to one of the preceding claims,
**characterized in that**
before the application of the polyurethane material onto the cavity surface, an insert material is inserted into the cavity.

18. The method according to one of the preceding claims,
**characterized in that**
a clamping frame is used between the mould half having the thermoplastic plastic support and the PUR mould half, which clamping frame closes off the cavity from the exterior environment before the pressing or impressing of the polyurethane material onto the injection moulded part.

19. The method according to one of the preceding claims,
**characterized in that**
the mould half of the PUR mould is constructed with an insert, the cavity recess is constructed in the insert, wherein the polyurethane material is applied onto the cavity surface of the insert outside the closing unit, and the insert is subsequently inserted into the second mould half.

20. The method according to Claim 19,
**characterized in that**
several inserts are provided for a PUR mould and different inserts are used in succession for inserting into the associated mould half.

21. The method according to Claim 20,
**characterized in that**
at least two inserts are constructed with a different cavity recess or with a different cavity surface.

22. The method according to one of Claims 19 to 21,
**characterized in that**
quick-clamping or bayonet systems are used for fixing the insert.

23. The method according to one of Claims 19 to 22,
**characterized in that**
the coated thermoplastic plastic support is removed from the mould together with the insert.

24. The method according to one of the preceding claims,
**characterized in that**
steel, aluminium, plastic or galvanoforms are used as material for the PUR mould half (20, 21, 22, 60).

25. The method according to one of the preceding claims,
**characterized in that**
in a first cycle, the thermoplastic plastic support (23, 24, 25) is produced and at the same time the polyurethane material is applied onto the cavity surface of the PUR mould (20, 21, 22, 60),
after the first cycle and before a second cycle, the association of the mould halves takes place and
in a second cycle the impressing of the polyurethane layer onto the thermoplastic plastic support takes place.

26. The method according to Claim 25,
**characterized in that**
the association takes place by rotation of the mould halves through 90°.

27. The method according to one of the preceding claims,
**characterized in that**
at least two PUR mixing heads (32, 33) are used, which are alternately supplied from a PUR system (38, 40) with a switching unit (43).

## Revendications

1. Procédé de fabrication d'une pièce composite revêtue
comprenant les étapes :
a) fabrication d'un support en matière thermoplastique (23, 24, 25) par introduction d'une masse fondue dans une cavité fermée d'un premier moule de formage (17, 18 ; 58, 59),
b) ouverture consécutive du premier moule de formage (17, 18 ; 58, 59), le support en matière thermoplastique (23, 24, 25) précédemment fabriqué restant positionné dans une demi-forme de moule de formage du premier moule de formage,
c) application d'une couche de polyuréthane sur la surface de cavité d'une première demi-forme de moule de formage (20, 21, 22, 60) d'un moule de formage en PUR,
d) association du support en matière thermoplastique (23, 24, 25) dans la demi-forme de moule de formage du premier moule de formage à la demi-forme de moule de formage (20 ; 21, 22, 60) munie de la couche de polyuréthane du moule de formage en PUR pour créer un deuxième moule de formage,
e) fermeture du deuxième moule de formage (17, 22 ; 19, 21 ; 58, 60) constitué de la demi-forme de moule de formage avec le support en matière thermoplastique (23, 24, 25) et de la demi-forme de moule de formage (20 ; 21, 22 ; 60) munie de la couche de polyuréthane, en appliquant par pression ou en estampant la couche de polyuréthane sur le support en matière thermoplastique, la couche de polyuréthane se répartissant dans la zone définie par la cavité du deuxième moule de formage sur la surface du support en matière thermoplastique,
f) au moins achèvement partiel de la réaction de la couche de polyuréthane,
g) ouverture du deuxième moule de formage et
h) retrait de la pièce composite revêtue (23', 62).

2. Procédé selon la revendication 1, **caractérisé en ce qu'**avant la fermeture du deuxième moule de formage, pour l'application par pression ou pour l'estampage de la couche de polyuréthane sur la pièce moulée par injection, on transfère le support en matière thermoplastique (23, 24, 25) dans la demi-forme de moule du premier moule de formage.

3. Procédé selon la revendication 1 ou 2, **caractérisé en ce que** l'application de la couche de polyuréthane sur la surface de la cavité du moule de formage (20, 21, 22, 60) s'effectue pendant le même cycle que l'introduction de la masse fondue dans le premier moule de formage (17, 18 ; 58, 59).

4. Procédé selon la revendication 1 ou 2, **caractérisé en ce que** l'application de la couche de polyuréthane sur la surface de la cavité du moule de formage (20) s'effectue après l'introduction de la masse fondue dans le premier moule de formage (17, 18) et l'ouverture consécutive du premier moule de formage.

5. Procédé selon l'une quelconque des revendications 1 à 4, **caractérisé en ce que** l'application de la couche de polyuréthane s'effectue par vaporisation de la matière sur la surface de la cavité.

6. Procédé selon l'une quelconque des revendications 1 à 4, **caractérisé en ce que** l'application de la couche de polyuréthane s'effectue par dépôt du polyuréthane sur une couche support que l'on pose ensuite dans l'évidement de cavité de la demi-forme du moule.

7. Procédé selon la revendication 6, **caractérisé en ce que** le dépôt du polyuréthane sur la couche support s'effectue dans un dispositif séparé, à côté de la presse d'injection pour la fabrication du support en matière thermoplastique.

8. Procédé selon la revendication 6 ou 7, **caractérisé en ce qu'**en tant que couche support, on utilise un film ou un décor.

9. Procédé selon la revendication 8, **caractérisé en ce que** le film ou le décor est fixé dans un cadre tendeur.

10. Procédé selon l'une quelconque des revendications 5 à 9, **caractérisé en ce qu'**on applique la couche de polyuréthane avec une tête mélangeuse de PUR (32 ; 33 ; 74) conçue en étant mobile sur la surface de cavité ou sur la couche support.

11. Procédé selon l'une quelconque des revendications précédentes, **caractérisé en ce que** lors de l'introduction de la couche de polyuréthane, on applique des matières polyuréthanes avec différentes propriétés simultanément ou successivement sur la surface de cavité.

12. Procédé selon l'une quelconque des revendications précédentes, **caractérisé en ce qu'**on utilise en tant que matière polyuréthane des matières polyuréthanes très visqueuses ou très chargées.

13. Procédé selon l'une quelconque des revendications précédentes, **caractérisé en ce que** le transfert des pièces moulées par injection s'effectue par rotation à l'aide d'une table rotative (1, 14) d'un agencement de plateau d'indexation ou d'un plateau amovible (18) ou par translation à l'aide d'une table de translation (57).

14. Procédé selon l'une quelconque des revendications précédentes, **caractérisé en ce qu'**avant l'introduction de la matière polyuréthane sur la surface de cavité, on applique sur la surface de cavité un agent de séparation.

15. Procédé selon l'une quelconque des revendications précédentes, **caractérisé en ce qu'**on utilise le film support ou le décor en tant qu'agent de séparation.

16. Procédé selon l'une quelconque des revendications précédentes, **caractérisé en ce qu'**avant l'application de la matière polyuréthane sur la surface de cavité, on applique sur la surface de cavité une couche de laque.

17. Procédé selon l'une quelconque des revendications précédentes, **caractérisé en ce qu'**avant l'application de la matière polyuréthane sur la surface de cavité, on insère dans la cavité une matière d'insertion.

18. Procédé selon l'une quelconque des revendications précédentes, **caractérisé en ce qu'**on utilise entre la demi-forme de moule comportant le support en matière plastique et la demi-forme de moule en PUR un cadre tendeur qui ferme la cavité par rapport à l'environnement extérieur avant l'application par pression ou l'estampage de la matière polyuréthane sur la pièce moulée par injection.

19. Procédé selon l'une quelconque des revendications précédentes, **caractérisé en ce que** la demi-forme de moule du moule de formage en PUR est conçue avec un insert, l'évidement pour la cavité est conçu dans l'insert, la matière polyuréthane étant appliquée sur la surface de cavité de l'insert à l'extérieur de l'unité de fermeture et **en ce qu'**on place ensuite l'insert dans la deuxième demi-forme de moule.

20. Procédé selon la revendication 19, **caractérisé en ce que** plusieurs inserts sont prévus par moule de formage en PUR et **en ce qu'**on utilise successivement plusieurs inserts pour les placer dans la demi-forme de moule associée.

21. Procédé selon la revendication 20, **caractérisé en ce qu'**au moins deux inserts sont conçus avec un évidement de cavité différent ou avec une surface de cavité différente.

22. Procédé selon l'une quelconque des revendications 19 à 21, **caractérisé en ce qu'**on
utilise des systèmes de serrage rapide ou des systèmes à baïonnette pour la fixation de l'insert.

23. Procédé selon l'une quelconque des revendications 19 à 22, **caractérisé en ce qu'**on retire le support en matière thermoplastique revêtu ensemble avec l'insert du moule de formage.

24. Procédé selon l'une quelconque des revendications précédentes, **caractérisé en ce que** pour la demi-forme de moule en PUR (20, 21, 22, 60), on utilise en tant que matière de l'acier, de l'aluminium, une matière plastique ou des pièces électroformées.

25. Procédé selon l'une quelconque des revendications précédentes, **caractérisé en ce que** dans premier cycle, on fabrique le support en matière thermoplastique (23, 24, 25) et simultanément, on applique la matière polyuréthane sur la surface de cavité du moule de formage en PUR (20, 21, 22, 60),
**en ce qu'**après un premier cycle et avant un deuxième cycle, on procède à l'association des demi-formes de moule et
**en ce que** dans un deuxième cycle, on procède à l'estampage de la couche de polyuréthane sur le support en matière thermoplastique.

26. Procédé selon la revendication 25, **caractérisé en ce que** l'association s'effectue par rotation de 90° des demi-formes de moules.

27. Procédé selon l'une quelconque des revendications précédentes, **caractérisé en ce**
**qu'**on utilise au moins deux têtes mélangeuses de PUR (32, 33) qui sont alimentées successivement à partir d'une installation de PUR (38, 40) avec une unité de commutation (43).
